# EUROPÄISCHE PATENTSCHRIFT

(11) **EP 4 261 436 B1**
(45) Veröffentlichungstag und Bekanntmachung des Hinweises auf die Patenterteilung: **30.10.2024**
(21) Anmeldenummer: 23160948.8
(22) Anmeldetag: 09.03.2023
(51) Int. Cl.: F16H 7/12, F16H 7/20

(54) **SPANNEINRICHTUNG**
CLAMPING DEVICE
DISPOSITIF DE SERRAGE

(30) Priorität: 13.04.2022 DE 102022203755
(43) Veröffentlichungstag der Anmeldung: 18.10.2023
(73) Patentinhaber: ContiTech Deutschland GmbH, 30175 Hannover (DE)
(72) Erfinder: Fiss, Tim, 30165 Hannover (DE); Sych, Thomas, 30165 Hannover (DE); Mensching, Jan, 30165 Hannover (DE)
(74) Vertreter: Continental Corporation

(56) Entgegenhaltungen:
- EP-A1- 3 199 834
- DE-A1- 102005 033 565
- DE-T5- 112005 002 788

## Beschreibung

Die Erfindung betrifft eine Spanneinrichtung gemäß dem Oberbegriff des Anspruchs 1. Die Erfindung betrifft außerdem einen Riementrieb gemäß Anspruch 6, einen Antrieb gemäß Anspruch 8 und ein Fahrzeug gemäß Anspruch 9.

### Stand der Technik

Spanneinrichtungen sind dem Fachmann aus dem Stand der Technik hinreichend bekannt. Spanneinrichtungen können zum Beispiel in Riementrieben eingesetzt werden, um eine ausreichende Vorspannkraft in einem Riemen für eine zuverlässige Leistungsübertragung zur Verfügung zu stellen. Eine gattungsgemäße Spanneinrichtung ist aus der DE112005002788T bekannt.

Riementriebe sind mit einer vorbestimmten Kraft vorgespannt. Die Vorspannkraft verteilt sich im statischen Zustand, d.h. bei Stillstand des Riementriebs, gleichmäßig auf die einzelnen Riementrume. Im dynamischen Zustand, d.h. bei einem sich bewegenden Riementrieb, erfolgt die Leistungsübertragung über ein so genanntes Lasttrum. Die Kraft im Lasttrum steigt mit dem in den Riemen eingeleiteten Drehmoment an. Betragsmäßig sinkt die Kraft im Leertrum in gleichem Maße und somit verringert sich auch die Vorspannung im Leertrum. Mit anderen Worten gesagt kann mit einem Riementrieb im Idealzustand so viel Leistung übertragen werden, bis die Vorspannkraft im Leertrum auf einen Wert von Null sinkt. Eine zu geringe Vorspannkraft im Leertrum kann nämlich dazu führen, dass der Riemen einen erhöhten Schlupf aufweist oder im Falle eines Zahnriemens zu einem Überspringen der Zähne neigt.

Das Aufbringen der Vorspannkraft kann durch eine Spanneinrichtung erfolgen, die im Leertrum des Riemens angeordnet sein kann. Damit kann im Falle von kraftschlüssigen Riementrieben, z. B. bei Keilriemen oder Keilrippenriemen, eine möglichst schlupfarme Leistungsübertragung sichergestellt werden. Bei Zahnriementrieben kann ein nachteiliger Zahnsprung wirksam unterbunden werden.

So können zum Spannen von Riemen zum Beispiel federgespannte Spannrollen oder Exzenterspannrollen verwendet werden. Exzenterspannrollen werden üblicher Weise für das einmalige Aufbringen einer festen Riemenvorspannung verwendet. Im Gegensatz zu einer federgespannten automatischen Spannrolle kann der gewünschte Vorspannungswert bei der Riemenmontage einmalig eingestellt werden, indem die Exzenterspannrolle in das Leertrum des Riemens geschwenkt wird und das Leertrum somit spannt. Die Exzenterspannrolle kann mit wenigstens einer Schraube in ihrer Position fixiert werden.

Die DE 196 34 344 A1 betrifft eine solche Spanneinrichtung für Zugmittel. Die Spannrolle ist in diesem Beispiel an einer Schildplatte montiert, wobei die Schildplatte schwenkbar an ein Maschinenteil angebunden ist. Zur Einstellung der Vorspannkraft des Riemens ist die Spannrolle in einem ersten Langloch relativ zur Schildplatte verschiebbar und durch eine Schraube festsetzbar. Die Schildplatte kann mit der vorpositionierten Spannrolle zur weiteren Aufbringung einer Vorspannkraft in den Riementrieb geschwenkt werden, wobei der Schwenkweg über ein zweites Langloch begrenzt ist. Die Position der Spanneinrichtung kann über eine weitere Schraube in dem zweiten Langloch festgesetzt werden.

Nachteiliger Weise können sich die Schraubverbindungen durch Setzeffekte über einen längeren Zeitraum lockern, wodurch die Exzenterspannrolle sukzessive aus dem Riementrieb gedrückt werden kann. Die durch Setzungserscheinungen im Riemen über die Laufzeit ohnehin schon abfallende Vorspannung kann so zusätzlich verstärkt werden, was schlussendlich zu einem vollständigen Systemversagen führen kann.

Um dies zu verhindern, ist zum Beispiel eine zusätzliche formschlüssige Arretierung der Exzenterrolle bekannt. Durch den Formschluss kann auch bei Lockerung der Schraubverbindung zur Arretierung der Exzenterrolle ein Verdrehen des Exzenters verhindert werden.

Nachteiliger Weise sind die einzelnen Arretierungspositionen vordefiniert, weshalb die Fixierung der Exzenterspannrolle nur in diskreten Rastpositionen möglich ist. Insbesondere bei Riemen mit einem hohen Elastizitätsmodul, d. h. einer hohen Steifigkeit, haben diese Rastpositionen den Nachteil, dass eine präzise Einstellung der Vorspannung nicht möglich ist.

### Aufgabe

Der Erfindung liegt die Aufgabe zugrunde, eine Spanneinrichtung bereitzustellen, mit der das Risiko eines Vorspannungsverlustes im Riemen in Folge einer sich verändernden Position der Spanneinrichtung durch eine sich lösende Schraubverbindung verringert bzw. vollständig vermieden werden kann. Zusätzlich oder alternativ soll eine präzise Einstellung der Vorspannkraft und bzw. oder eine stufenlose Verstellung der Position der Spanneinrichtung ermöglicht werden.

### Lösung der Aufgabe

Die Lösung dieser Aufgabe ergibt sich durch eine Spanneinrichtung mit den Merkmalen des unabhängigen Anspruchs 1.

Anspruch 6 betrifft einen Riementrieb mit einer erfindungsgemäßen Spanneinrichtung.

Anspruch 8 betrifft einen Antrieb mit einem erfindungsgemäßen Riementrieb.

Anspruch 9 betrifft ein Fahrzeug mit einem erfindungsgemäßen Antrieb.

Weitere vorteilhafte Ausbildungen sind in den abhängigen Ansprüchen offenbart.

### Vorteile der Erfindung

Die vorliegende Anmeldung betrifft eine Spanneinrichtung, vorzugsweise zum Spannen eines Riemens, mit einem feststehend angeordneten ersten Positionierelement aus einem ersten Material und mit wenigstens einer Exzentereinheit, wobei die Exzentereinheit ein zweites Positionierelement aus einem zweiten Material aufweist, wobei das zweite Positionierelement um einen Drehpunkt schwenkbar gelagert ist, wobei das erste Positionierelement und das zweite Positionierelement zum formschlüssigen Halt der Exzentereinheit am ersten Positionierelement ausgebildet sind.

Die Spanneinrichtung ist gekennzeichnet durch ein zwischen dem ersten Positionierelement und dem zweiten Positionierelement angeordnetes verformbares Klemmelement, wobei das Klemmelement ein drittes Material mit einer geringeren Härte als das erste Material und das zweite Material aufweist.

Mit anderen Worten gesagt ist die Exzentereinheit feststehend mit dem zweiten Positionierelement verbunden. Die Exzentereinheit kann als eine Exzenterrolle für einen Riementrieb ausgebildet sein. Für eine kraftfreie Montage des Riemens kann das zweite Positionierelement und somit die Exzentereinheit in einer ersten Position aus dem Riemen herausgeschwenkt sein. Zum Vorspannen des Riemens kann die Exzentereinheit um den Drehpunkt in den Riemen, vorzugsweise in das Leertrum des Riemens, in eine zweite Position hineingeschwenkt werden. Der Drehpunkt ist zentrisch in dem zweiten Positionierelement angeordnet, wobei das zweite Positionierelement exzentrisch an der Exzentereinheit angeordnet ist. Somit ist der Drehpunkt exzentrisch an der Exzentereinheit angeordnet, weshalb die Exzentereinheit exzentrisch um den Drehpunkt schwenkbar ist. So kann der Weg, mit dem die Exzentereinheit in den Riemen hineingeschwenkt wird, in Abhängigkeit des Winkels, um den die Exzentereinheit um den Drehpunkt geschwenkt wird, eingestellt werden. In Abhängigkeit des Weges, mit dem die Exzentereinheit in den Riemen hineingeschwenkt wird, kann die Vorspannkraft des Riemens stufenlos eingestellt werden. Die Exzentereinheit mit dem zweiten Positionierelement kann mit anderen Worten gesagt relativ zu dem feststehend, zum Beispiel an einem Rahmen einer Maschine, angeordneten ersten Positionierelement verdreht werden.

Die Exzentereinheit kann über das zweite Positionierelement und das verformbare Klemmelement mit dem ersten Positionierelement arretiert werden.

Die eingestellte Vorspannung im Riemen kann aufrechterhalten werden, indem das zweite Positionierelement der Exzentereinheit verdrehfest mit dem ersten Positionierelement in der gewünschten Position arretiert wird. Hierzu kann das erste Positionierelement, das Klemmelement und das zweite Positionierelement jeweils eine Bohrung aufweisen, wobei der Mittelpunkt der Bohrung dem Drehpunkt entsprechen kann. Mit anderen Worten gesagt können die in dem ersten Positionierelement, in dem Klemmelement und in dem zweiten Positionierelement angeordneten Bohrungen in einer Linie, die dem Drehpunkt entsprechen kann, fluchtend zueinander liegen. In der Bohrung des ersten Positionierelements kann ein Gewinde ausgebildet sein. Durch die Bohrung des ersten Positionierelements, des Klemmelements und des zweiten Positionierelements kann eine Schraube hindurchgeführt sein. Die Schraube kann so das erste Positionierelement, das Klemmelement und das zweite Positionierelement durchgreifen.

Zwischen dem ersten Positionierelement und dem zweiten Positionierelement ist das verformbare Klemmelement in Form einer Scheibe angeordnet. Das erste Positionierelement weist ein erstes Material auf, wobei das zweite Positionierelement ein zweites Material aufweist. Vorzugsweise kann das erste Material mit dem zweiten Material identisch ausgebildet sein. Besonders bevorzugt sind das erste Material und das zweite Material ein Stahlwerkstoff. Das verformbare Klemmelement ist aus einem dritten Material ausgebildet, das eine geringere Härte als das Material des ersten Positionierelements und das Material des zweiten Positionierelements aufweist. Das Klemmelement kann aus Aluminium ausgebildet sein.

Zur Arretierung der Exzentereinheit kann die Schraube so weit in das Gewinde des ersten Positionierelements eingeschraubt werden, sodass das erste Positionierelement und das zweite Positionierelement gegen das Klemmelement angezogen werden können. Eine zum Beispiel zahnförmige Profilierung des ersten Positionierelements und eine zahnförmige Profilierung des zweiten Positionierelements können sich aufgrund des Materials größerer Härte als Negativ in das Klemmelement mit dem dritten Material geringerer Härte einformen.

Die Exzentereinheit kann auf diese Weise über das zweite Positionierelement formschlüssig mit dem Klemmelement und über das Klemmelement formschlüssig mit dem ersten Positionierelement arretiert werden, wodurch ein Verdrehen der Exzentereinheit bei gelöster Schraube besonders vorteilhaft vermieden werden kann. Bei zum Beispiel einem Wechsel des Riemens muss für das anschließende Einstellen der Position bzw. des Verdrehwinkels der Exzentereinheit bzw. der Riemenvorspannung lediglich das Klemmelement erneuert werden.

Es zeigt sich als besonders vorteilhaft, dass die Arretierungsposition der Exzentereinheit nicht bereits durch in dem Klemmelement vordefinierte Verzahnungen von vorn herein bestimmt ist, sondern dass die Arretierungsposition der Exzentereinheit durch das Einformen der zum Beispiel zahnförmigen Profilierung des ersten Positionierelements und der zum Beispiel zahnförmigen Profilierung des zweiten Positionierelements in das Klemmelement erst nach dem präzisen und stufenlosen Einstellen der Position bzw. des Verdrehwinkels der Exzentereinheit und daraus folgend nach der stufenlosen Einstellung der Vorspannung des Riemens erfolgen kann. Mit anderen Worten gesagt kann die Exzentereinheit durch die erfindungsgemäße Spanneinrichtung stufenlos verstellt und in der optimalen Position formschlüssig arretiert werden.

Gemäß einem weiteren Aspekt der vorliegenden Erfindung ist eine exzentrische Spannrollenachse feststehend mit dem zweiten Positionierelement verbunden und weist wenigstens eine um die Spannrollenachse drehbar gelagerte Spannrolle auf. Mit anderen Worten gesagt weist die Exzentereinheit einen mit dem zweiten Positionierelement feststehend verbundenen Körper auf, wobei der Körper die Spannrollenachse bildet. Auf der Spannrollenachse ist wenigstens eine Spannrolle drehbar gelagert, vorzugsweise durch wenigstens ein Kugellager. Alternativ können auf mehrere Spannrollen parallel auf der Spannrollenachse angeordnet und gelagert sein. Auf der Spannrolle kann der Riemen reibungsarm abrollen. Die auf diese Weise ausgebildete Exzentereinheit kann auch Exzenterspannrolle genannt werden. So können die zuvor genannten Eigenschaften und Vorteile auf die Exzenterspannrolle übertragen werden.

Gemäß einem weiteren Aspekt der vorliegenden Erfindung ist das erste Material und das zweite Material identisch ausgebildet. Mit anderen Worten gesagt sind das erste Positionierelement und das zweite Positionierelement aus dem gleichen Material ausgebildet. Die zahnförmigen Profilierungen des ersten Positionierelements und des zweiten Positionierelements können sich so symmetrisch in das Klemmelement einformen und durch Formschluss die jeweils gleiche Sicherungskraft gegen ein Verdrehen der Exzentereinheit im arretierten Zustand bereitstellen.

Gemäß der vorliegenden Erfindung weisen das erste Positionierelement und das zweite Positionierelement eine korrespondierende Profilierung auf, wobei gemäß einem weiteren Aspekt der vorliegenden Erfindung die Profilierung als eine Verzahnung ausgebildet ist. Insbesondere bei Ausbildung der Profilierung als Verzahnung kann durch eine hohe Flächenpressung im Bereich der Zahnspitzen und dem Klemmelement eine formschlüssige Verbindung zwischen dem ersten Positionierelement, dem Klemmelement und dem zweiten Positionierelement schon bei geringen Klemmkräften herbeigeführt werden.

Gemäß der vorliegenden Erfindung sind die Profilierung des ersten Positionierelements und die Profilierung des zweiten Positionierelements als Negativ in das verformbare Klemmelement einformbar. Auf besonders vorteilhafte Weise kann eine formschlüssige Verbindung zwischen dem ersten Positionierelement, dem Klemmelement und dem zweiten Positionierelement stufenlos eingestellt werden. Die Arretierungsposition der Exzentereinheit kann durch das Einformen der zahnförmigen Profilierung des ersten Positionierelements und der zahnförmigen Profilierung des zweiten Positionierelements in das Klemmelement erst nach dem präzisen und stufenlosen Einstellen der Position bzw. des Verdrehwinkels der Exzentereinheit und daraus folgend nach der stufenlosen Einstellung der Vorspannung des Riemens erfolgen.

Gemäß einem weiteren Aspekt der vorliegenden Erfindung sind das erste Positionierelement und das zweite Positionierelement ausgebildet, axial gegen das Klemmelement gepresst zu werden, vorzugsweise über eine Schraubverbindung. Eine Schraubverbindung bietet insbesondere den Vorteil, dass die Kraft, mit welcher das erste Positionierelement und das zweite Positionierelement gegen das Klemmelement gepresst werden, durch das Anzugsmoment der Schraube einstellbar ist. Außerdem bietet eine Schraubverbindung als weiteren Vorteil, dass die Verbindung zerstörungsfrei lösbar ist und eine Demontage der Spanneinrichtung ermöglichen kann.

Die Erfindung betrifft außerdem einen Riementrieb mit einer erfindungsgemäßen Spanneinrichtung. Die zuvor beschriebenen Eigenschaften und Vorteile der erfindungsgemäßen Spanneinrichtung lassen sich so auf beliebige Riementriebe übertragen. Riementriebe finden beispielsweise Anwendung zur Leistungsübertragung zwischen wenigstens zwei Wellen in unterschiedlichen Maschinen, Anlagen oder Fahrzeugen. Der erfindungsgemäße Riementrieb kann sowohl Riemen zur formschlüssigen Kraftübertragung wie zum Beispiel Zahnriemen als auch Riemen zur reibschlüssigen Kraftübertragung wie zum Beispiel Flachriemen, Keilriemen oder Keilrippenriemen umfassen.

Gemäß einem weiteren Aspekt der vorliegenden Erfindung ist die Spanneinrichtung zum Spannen eines Leertrums des Riemens ausgebildet, wobei die Spannrolle auf dem Leertrum des Riemens abrollbar ist. Insbesondere ist die Anordnung der Spanneinrichtung im Leertrum des Riemens besonders vorteilhaft, da das Leertrum bei steigender Leistungsübertragung an Vorspannkraft verliert und entsprechend gespannt werden muss. Bei Riementrieben mit Richtungs- und bzw. oder Drehmomentumkehr und einem Wechsel zwischen Lasttrum und Leertrum kann die Anordnung der erfindungsgemäßen Spanneinrichtung in jedem Riementrum vorteilhaft sein.

Die Erfindung betrifft weiterhin einen Antrieb mit einem erfindungsgemäßen Riementrieb. Die zuvor genannten Eigenschaften und Vorteile lassen sich so auf beliebige Antriebe mit einem Riementrieb übertragen.

Die Erfindung betrifft auch ein Fahrzeug mit wenigstens einem erfindungsgemäßen Antrieb. Die zuvor genannten Eigenschaften und Vorteile lassen sich so bei Antrieben verschiedener Fahrzeuge anwenden. Unter Fahrzeugen können Land-, Wasser- oder Luftfahrzeuge aller Art verstanden werden. Insbesondere bei Fahrzeugen, bei denen die Funktionssicherheit des Antriebs einen besonders großen Stellenwert hat, kann diese durch die erfindungsgemäße Spanneinrichtung auf vorteilhafte Weise erhöht werden.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder den übrigen unabhängigen Ansprüchen kombinierbar sind.

### Erläuterung Figuren

Verschiedene Ausführungsbeispiele und weitere Vorteile der Erfindung werden nachstehend in Zusammenhang mit den folgenden schematischen Figuren erläutert. Darin zeigt:
Fig. 1 eine frontale Ansicht einer erfindungsgemäßen Spanneinrichtung.
Fig. 2 eine Schnittdarstellung der erfindungsgemäßen Spanneinrichtung in einer Seitenansicht in einer ersten Position in einem nicht arretierten Zustand.
Fig. 3 die Schnittdarstellung der erfindungsgemäßen Spanneinrichtung in der Seitenansicht in einer zweiten Position in einem arretierten Zustand.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

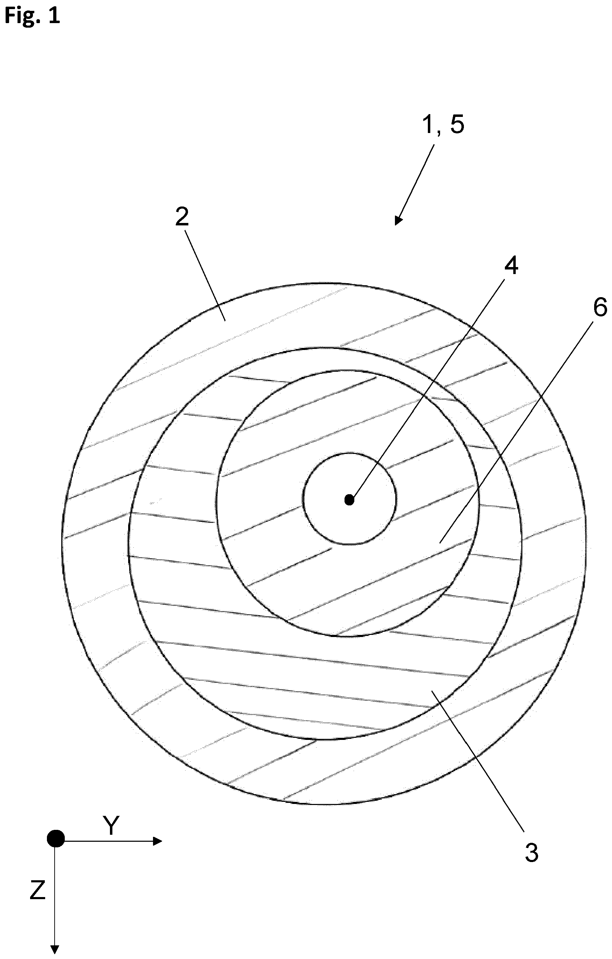

Figur 1 zeigt die schematische Darstellung einer Exzentereinheit 5 einer Spanneinrichtung 1 in frontaler Ansicht. Die Exzentereinheit 5 weist ein zweites Positionierelement 6 auf, wobei das zweite Positionierelement 6 um einen Drehpunkt 4 schwenkbar gelagert ist. Die Exzentereinheit 5 weist außerdem eine exzentrische Spannrollenachse 3 auf, die feststehend mit dem zweiten Positionierelement 6 verbunden ist. Auf der Spannrollenachse 3 ist eine Spannrolle 2 drehbar gelagert. Die gesamte Exzentereinheit 5 ist um den exzentrischen Drehpunkt 4 schwenkbar.

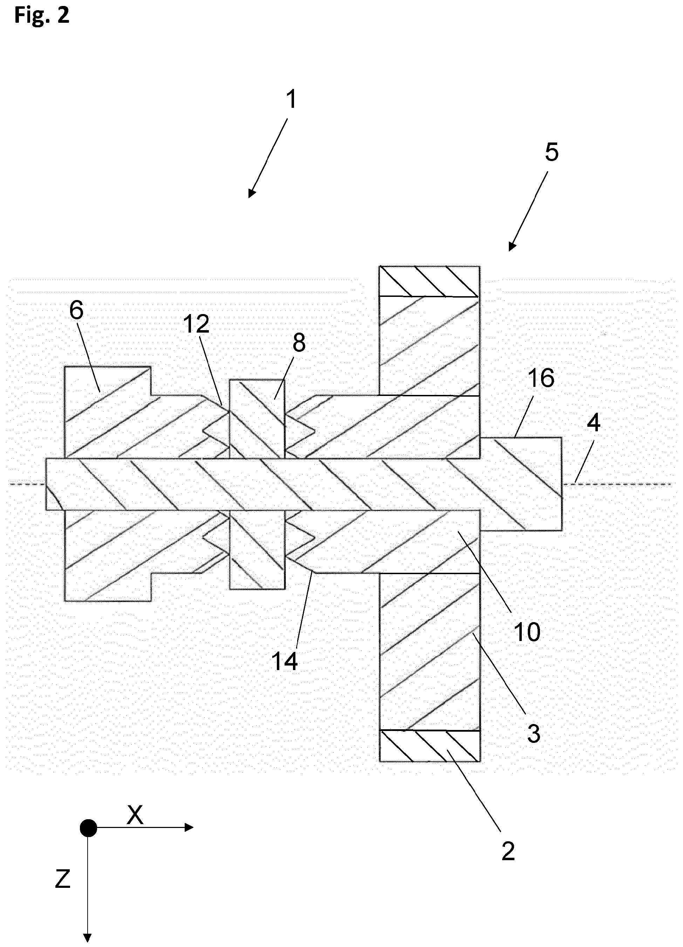

Figur 2 zeigt eine Schnittdarstellung der erfindungsgemäßen Spanneinrichtung 1 in der Seitenansicht in einer ersten Position in einem nicht arretierten Zustand. Die Spanneinrichtung 1 umfasst ein erstes Positionierelement 6, ein verformbares Klemmelement 8 und die Exzentereinheit 5. Das erste Positionierelement 6 weist eine zahnförmige Profilierung 12 auf. Weiterhin weist das zweite Positionierelement 10 eine weitere zahnförmige Profilierung 14 auf, die korrespondierend zur zahnförmigen Profilierung 12 des ersten Positionierelements 6 ausgebildet ist. Das erste Positionierelement 6 ist Teil eines Maschinengestells bzw. an ein Maschinengestell (nicht dargestellt) angebunden. Zwischen dem ersten Positionierelement 6 und dem zweiten Positionierelement 10 ist das verformbare Klemmelement 8 in Form einer Scheibe angeordnet.

Das verformbare Klemmelement 8 ist aus einem Werkstoff ausgebildet, der eine geringere Härte als der Werkstoff des ersten Positionierelements 6 und der Werkstoff des zweiten Positionierelements 10 besitzt. In diesem Ausführungsbeispiel ist das verformbare Klemmelement 8 aus Aluminium ausgebildet. Das erste Positionierelement 6 und das zweite Positionierelement 10 sind aus einem Stahlwerkstoff ausgebildet.

Das erste Positionierelement 6, das verformbare Klemmelement 8 und das zweite Positionierelement 10 weisen jeweils eine Bohrung (nicht bezeichnet) auf, wobei der Mittelpunkt der Bohrung dem exzentrischen Drehpunkt 4 entspricht. Mit anderen Worten gesagt liegen die in dem ersten Positionierelement 6, in dem verformbaren Klemmelement 8 und in dem zweiten Positionierelement 10 angeordneten Bohrungen entlang der Längsrichtung X in einer Linie, die dem Drehpunkt 4 entspricht, fluchtend zueinander. In der Bohrung des ersten Positionierelements 6 ist ein nicht näher dargestelltes Gewinde ausgebildet. Durch die Bohrung ist eine Schraube 16 hindurchgeführt. Die Schraube 16 durchgreift das erste Positionierelement 6, das verformbare Klemmelement 8 und das zweite Positionierelement 10.

In der Darstellung der Figur 2 ist die Schraube 16 nur soweit in das Gewinde des ersten Positionierelements 6 eingeschraubt, dass die zahnförmige Profilierung 12 des ersten Positionierelements 6 und die zahnförmige Profilierung 14 des zweiten Positionierelements 10 auf der Oberfläche des verformbaren Klemmelements 8 unter geringer Kraft bzw. kraftlos aufliegen. Die Exzentereinheit 5 kann in diesem Zustand um den Drehpunkt 4 exzentrisch stufenlos geschwenkt werden. Mit anderen Worten gesagt gleiten die Zähne der Profilierung 12 des ersten Positionierelements 6 auf der Oberfläche des Klemmelements 8, wenn sich die Exzentereinheit 5 um den Drehpunkt 4 verdreht.

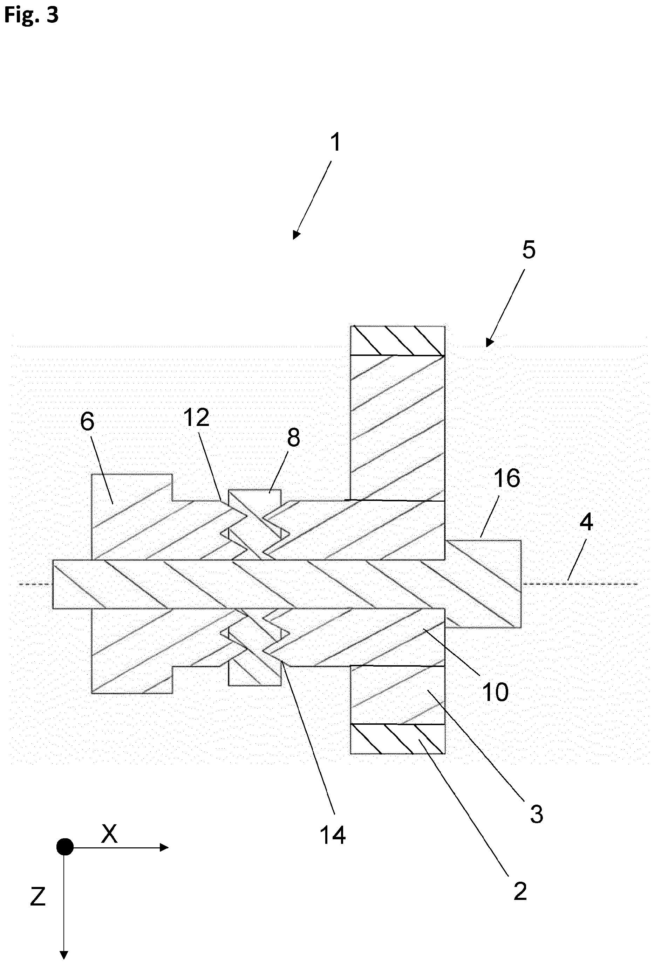

Fig. 3 zeigt die Schnittdarstellung der erfindungsgemäßen Spanneinrichtung 1 in der Seitenansicht in einer zweiten Position in einem arretierten Zustand. Im Vergleich zu der Darstellung in Figur 2 ist die Exzentereinheit 5 um den Drehpunkt 4 verdreht dargestellt. Ein über die Spannrolle 2 laufendes, nicht näher dargestelltes Riementrum würde so gespannt werden. Die Schraube 16 ist so weit in das Gewinde des ersten Positionierelements 6 eingeschraubt, dass das erste Positionierelement 6 und das zweite Positionierelement 10 in Längsrichtung X gegen das verformbare Klemmelement 8 angezogen sind. Die zahnförmige Profilierung 12 des ersten Positionierelements 6 und die zahnförmige Profilierung 14 des zweiten Positionierelements 10 sind als Negativ in das Klemmelement 8 eingeformt.

Die Exzentereinheit 5 ist auf diese Weise über das zweite Positionierelement 10 formschlüssig mit dem Klemmelement 8 und über das Klemmelement 8 formschlüssig mit dem ersten Positionierelement 6 arretiert, wodurch ein Verdrehen der Exzentereinheit 5 bei gelöster Schraube 16 vermieden wird. Mittels der formschlüssigen Kraftübertragung des Klemmelements 8 zwischen den beiden Positionierelementen 6, 10 kann eine stufenlos Positionierung in der Umfangsrichtung des Drehpunts 4 erfolgen, welche ohne die Verwendung des Klemmelements 8 nicht möglich wäre.

### Bezugszeichenliste (Teil der Beschreibung)

- 1: Spanneinrichtung
- 2: Spannrolle
- 3: Spannrollenachse
- 4: Drehpunkt
- 5: Exzentereinheit
- 6: Erstes Positionierelement
- 8: Klemmelement
- 10: Zweites Positionierelement
- 12: Zahnförmige Profilierung des ersten Positionierelements
- 14: Zahnförmige Profilierung des zweiten Positionierelements
- 16: Schraube

- X: Längsrichtung; Tiefe
- Y: Querrichtung; Breite
- Z: vertikale Richtung; Höhe
- X, Y: horizontale Ebene

## Patentansprüche

1. Spanneinrichtung (1), vorzugsweise zum Spannen eines Riemens, mit einem feststehend angeordneten ersten Positionierelement (6) aus einem ersten Material und mit wenigstens einer Exzentereinheit (5),
wobei die Exzentereinheit (5) ein zweites Positionierelement (10) aus einem zweiten Material aufweist,
wobei das zweite Positionierelement (10) um einen Drehpunkt (4) schwenkbar gelagert ist,
wobei das erste Positionierelement (6) und das zweite Positionierelement (10) zum formschlüssigen Halt der Exzentereinheit (5) am ersten Positionierelement (6) ausgebildet sind, **wobei** ein zwischen dem ersten Positionierelement (6) und dem zweiten Positionierelement (10) angeordnetes verformbares Klemmelement (8) ein drittes Material mit einer geringeren Härte als das erste Material und das zweite Material aufweist,
wobei das erste Positionierelement (6) und das zweite Positionierelement (10) eine korrespondierende Profilierung (12, 14) aufweisen,
**dadurch gekennzeichnet, dass**
die Profilierung (12) des ersten Positionierelements (6) und die Profilierung (14) des zweiten Positionierelements (10) als Negativ in das verformbare Klemmelement (8) einformbar sind.

2. Spanneinrichtung (1) nach Anspruch 1,
**dadurch gekennzeichnet, dass**
eine exzentrische Spannrollenachse (3) feststehend mit dem zweiten Positionierelement (10) verbunden ist, und wenigstens eine um die Spannrollenachse (3) drehbar gelagerte Spannrolle (2) aufweist.

3. Spanneinrichtung (1) nach einem der vorhergehenden Ansprüche,
**dadurch gekennzeichnet, dass**
das erste Material und das zweite Material identisch ausgebildet sind.

4. Spanneinrichtung (1) nach einem der vorhergehenden Ansprüche,
**dadurch gekennzeichnet, dass**
die Profilierung (12, 14) als eine Verzahnung (12, 14) ausgebildet ist.

5. Spanneinrichtung (1) nach einem der vorhergehenden Ansprüche,
**dadurch gekennzeichnet, dass**
das erste Positionierelement (6) und das zweite Positionierelement (10) ausgebildet sind, axial gegen das Klemmelement (8) gepresst zu werden, vorzugsweise über eine Schraubverbindung.

6. Riementrieb mit einer Spanneinrichtung (1) nach einem der vorhergehenden Ansprüche.

7. Riementrieb nach Anspruch 6, wobei die Spanneinrichtung (1) zum Spannen eines Leertrums des Riemens ausgebildet ist,
wobei die Spannrolle (2) auf dem Leertrum des Riemens abrollbar ist.

8. Antrieb mit einem Riementrieb nach einem der Ansprüche 6 oder 7.

9. Fahrzeug mit wenigstens einem Antrieb nach Anspruch 8.

## Claims

1. Tensioning device (1), preferably for tensioning a belt, having a first positioning element (6) which is arranged in a fixed manner and is composed of a first material, and having at least one eccentric unit (5),
wherein the eccentric unit (5) has a second positioning element (10) which is composed of a second material,
wherein the second positioning element (10) is mounted so as to be pivotable about a (4) pivot point,
wherein the first positioning element (6) and the second positioning element (10) are configured for form-fitting retention of the eccentric unit (5) on the first positioning element (6), wherein a deformable clamping element (8) arranged between the first positioning element (6) and the second positioning element (10) comprises a third material with a lower hardness than the first material and the second material,
wherein the first positioning element (6) and the second positioning element (10) have a corresponding profiling (12, 14),
**characterized in that**
the negative of the profiling (12) of the first positioning element (6) and the negative of the profiling (14) of the second positioning element (10) are able to be formed in the deformable clamping element (8).

2. Tensioning device (1) according to Claim 1,
**characterized in that**
an eccentric tensioning-roller shaft (3) is connected in a fixed manner to the second positioning element (10) and has at least one tensioning roller (2) which is mounted so as to be rotatable around the tensioning-roller shaft (3).

3. Tensioning device (1) according to either of the preceding claims,
**characterized in that**
the first material and the second material are of identical design.

4. Tensioning device (1) according to either of the preceding claims,
**characterized in that**
the profiling (12, 14) is in the form of a toothing (12, 14).

5. Tensioning device (1) according to either of the preceding claims,
**characterized in that**
the first positioning element (6) and the second positioning element (10) are configured for being pressed axially against the clamping element (8), preferably via a screw connection.

6. Belt drive having a tensioning device (1) according to one of the preceding claims.

7. Belt drive according to Claim 6, wherein the tensioning device (1) is configured for tensioning an empty strand of the belt,
wherein the tensioning roller (2) is able to roll on the empty strand of the belt.

8. Drive having a belt drive according to either of Claims 6 and 7.

9. Vehicle having at least one drive according to Claim 8.

## Revendications

1. Dispositif tendeur (1), de préférence pour tendre une courroie, avec un premier élément de positionnement (6) agencé de manière fixe et composé d'un premier matériau et avec au moins une unité d'excentrique (5),
l'unité d'excentrique (5) présentant un deuxième élément de positionnement (10) composé d'un deuxième matériau,
le deuxième élément de positionnement (10) étant monté de manière rotative autour d'un point de rotation (4),
le premier élément de positionnement (6) et le deuxième élément de positionnement (10) étant réalisés pour maintenir l'unité d'excentrique (5) par complémentarité de forme sur le premier élément de positionnement (6), un élément de serrage déformable (8) agencé entre le premier élément de positionnement (6) et le deuxième élément de positionnement (10) présentant un troisième matériau ayant une dureté inférieure à celle du premier matériau et du deuxième matériau,
le premier élément de positionnement (6) et le deuxième élément de positionnement (10) présentant un profilage correspondant (12, 14),
**caractérisé en ce que**
le profilage (12) du premier élément de positionnement (6) et le profilage (14) du deuxième élément de positionnement (10) peuvent être formés en négatif dans l'élément de serrage déformable (8).

2. Dispositif tendeur (1) selon la revendication 1,
**caractérisé en ce**
**qu'**un axe de galet tendeur excentrique (3) est relié de manière fixe au deuxième élément de positionnement (10), et présente au moins un galet tendeur (2) monté de manière rotative autour de l'axe de galet tendeur (3).

3. Dispositif tendeur (1) selon l'une quelconque des revendications précédentes,
**caractérisé en ce que**
le premier matériau et le deuxième matériau sont réalisés de manière identique.

4. Dispositif tendeur (1) selon l'une quelconque des revendications précédentes,
**caractérisé en ce que**
le profilage (12, 14) est réalisé sous la forme d'une denture (12, 14).

5. Dispositif tendeur (1) selon l'une quelconque des revendications précédentes,
**caractérisé en ce que**
le premier élément de positionnement (6) et le deuxième élément de positionnement (10) sont réalisés pour être pressés axialement contre l'élément de serrage (8), de préférence par l'intermédiaire d'une liaison vissée.

6. Transmission par courroie avec un dispositif tendeur (1) selon l'une quelconque des revendications précédentes.

7. Transmission par courroie selon la revendication 6, dans laquelle le dispositif tendeur (1) est réalisé pour tendre un brin vide de la courroie,
le galet tendeur (2) pouvant se dérouler sur le brin vide de la courroie.

8. Entraînement avec une transmission par courroie selon l'une quelconque des revendications 6 ou 7.

9. Véhicule avec au moins un entraînement selon la revendication 8.
